# EUROPÄISCHE PATENTSCHRIFT

(11) **EP 1 685 369 B1**
(45) Veröffentlichungstag und Bekanntmachung des Hinweises auf die Patenterteilung: **19.04.2017**
(21) Anmeldenummer: 04797605.5
(22) Anmeldetag: 04.11.2004
(51) Int. Cl.: G01F 1/84, G01N 9/00

(54) **MESSAUFNEHMER VOM VIBRATIONSTYP**
VIBRATORY-TYPE MEASURING SENSOR
CAPTEUR DE TYPE VIBRATOIRE

(30) Priorität: 20.11.2003 DE 10354373
(43) Veröffentlichungstag der Anmeldung: 02.08.2006
(73) Patentinhaber: Endress + Hauser Flowtec AG, 4153 Reinach (CH)
(72) Erfinder: RIEDER, Alfred, 84032 Landshut (DE); DRAHM, Wolfgang, 85435 Erding (DE)
(74) Vertreter: Andres, Angelika Maria
(86) Internationale Anmeldenummer: PCT/EP2004/012479
(87) Internationale Veröffentlichungsnummer: WO 2005/050144

(56) Entgegenhaltungen:
- WO-A-96/08697
- US-A- 4 354 377
- US-A- 5 691 485
- US-B1- 6 343 517

## Beschreibung

Die Erfindung betrifft einen Messaufnehmer vom Vibrationstyp. Insbesondere beschäftigt sich die Erfindung mit der Fixierung von Messrohren eines solchen Messaufnehmers vom Vibrationstyp, beispielsweise eines nach dem Coriolis-Prinzip arbeitenden Massedurchflussaufnehmers, in einem dem schwingfähigen Haltern des Messrohrs dienenden Trägerelement.

Zum Messen bzw. zum Erfassen einer Prozeßgröße von in Rohrleitungen strömenden Medien, insb. zum Erfassen strömungsdynamischer und/oder rheologischer Meßgrößen von Fluiden, werden in der Mess- und Automatisierungstechnik nach den verschiedensten physikalischen Prinzipien arbeitende In-Line-Meßgeräte verwendet. Zum Erfassen der jeweiligen Prozeßgröße, beispielsweise eines Massendurchflusses, einer Dichte und/oder einer Viskosität eines Fluids, weist das In-Line-Meßgerät einen entsprechenden, zumeist physikalisch-elektrischen, Meßaufnehmer auf, der in den Verlauf der das Medium jeweils führenden Leitung eingesetzt ist und der dazu dient, wenigstens ein die primär erfaßte Prozeßgröße möglichst genau repräsentierendes, insb. elektrisches, Meßsignal zu erzeugen. Der Meßaufnehmer ist dabei z.B. mittels Flanschen mediumsdicht, insb. druckdicht, und zumeist auch dauerhaft mit der Leitung verbunden.

Zum Betrieb des Meßaufnehmers, insb. auch zur Weiterverarbeitung oder Auswertung des wenigstens einen Meßsignals, ist dieser ferner mit einer entsprechenden Meßgerät-Elektronik verbunden. Bei In-Line-Meßgeräten der beschriebenen Art ist die Meßgerät-Elektronik wiederum üblicherweise über ein angeschlossenes Datenübertragungs-System mit anderen In-Line-Meßgeräten und/oder mit entsprechenden Prozeß-Leitrechnern verbunden, wohin sie die Meßwertsignale z.B. via (4 mA bis 20 mA)-Stromschleife und/oder via digitalen Daten-Bus sendet. Als Datenübertragungs-Systeme dienen hierbei oftmals, insb. serielle, Feldbus-Systeme, wie z.B. PROFIBUS-PA, FOUNDATION FIELDBUS sowie die entsprechenden Übertragungs-Protokolle.

Mittels der Prozeß-Leitrechner können die übertragenen Meßwertsignale weiterverarbeitet und als entsprechende Meßergebnisse z.B. auf Monitoren visualisiert und/oder in Steuersignale für Prozeß-Stellglieder, wie z.B. Magnet-Ventile, ElektroMotoren etc., umgewandelt werden. Zur Aufnahme der Meßgerät-Elektronik umfassen solche In-Line-Meßgeräte ferner ein Elektronik-Gehäuse, das, wie z.B. in der WO-A 00/36 379 vorgeschlagen, vom Meßaufnehmer entfernt angeordnet und mit diesem nur über eine flexible Leitung verbunden sein kann oder das, wie z.B. auch in der EP-A 1 296 128 oder der WO-A 02/099363 gezeigt, direkt am Meßaufnehmer, insb. einem den Meßaufnehmer einhausenden Meßaufnehmer-Gehäuse, angeordnet ist.

Für die Messung speziell von Massendurchflüssen, Dichten und/oder Viskositäten strömender Medien haben sich bereits seit längerem In-Line-Meßgeräte mit einem in den Verlauf einer das zu messende Fluid führenden Rohrleitung einzusetzenden Meßaufnehmer vom Vibrationstyp etabliert. Derartige In-Line-Meßgeräte bzw. Meßaufnehmer, ihr mechanischer Aufbau oder auch entsprechende Meßsignale erzeugende Meß- und Auswerteverfahren sind beispielsweise in der EP-A 189 230, der EP-A 527 176, der EP-A 1 154 243, der EP-A 1 158 289, der EP-A 1 223 412, der EP-A 1 296 128, der US-A 45 24 610, der US-A 47 68 384, der US-A 48 01 897, der US-A 48 23 614, der US-A 52 31 884, der US-A 53 59 881, der US-A 56 02 345, der US-A 56 61 232, der US-A 56 87 100, der US-A 60 06 609, der US-B 63 27 915, der US-B 63 43 517, der US-B 63 54 154, der US-B 64 87 917, der US-B 65 13 393, der US-B 66 34 241, der US-A 2003/0154804, der US-A 2003/0097881, der US-A 2003/0097884, der WO-A 88 02 476, der WO-A 95/16 897, der WO-A 01/02813, der WO-A 01/02816, der WO-A 02/099363, der WO-A 03/048693 u.v.a. ausführlich beschrieben. Insbesondere sind in der US-B 66 34 241, der US-B 64 87 917, der US-B 63 54 154, der US-B 63 43 517, der US-B 63 27 915 Meßaufnehmer vom Vibrationstyp, insb. Coriolis-Massedurchflußaufnehmer, gezeigt, die jeweils umfassen:
- wenigstens ein ein Einlassende und ein Auslassende aufweisendes, zumindest zeitweise vibrierendes Messrohr zum Führen des zu messenden Fluids,
   -- wobei das Messrohr zum Hindurchströmenlassen des Fluids über ein in das Einlassende mündendes erstes Rohrsegment und über ein in das Auslassende mündendes zweites Rohrsegment mit einer angeschlossenen Rohrleitung kommuniziert, und
   -- wobei das Messrohr im Betrieb mechanische Schwingungen um eine die beiden Rohrsegmente verbindende gedachte Schwingungsachse ausführt, sowie
- ein massives Trägerelement aus Metall zum schwingfähigen Haltern des Messrohrs,
   -- mit einem eine Durchgangsöffnung aufweisenden ersten Endstück zum Fixieren des ersten Rohrsegments und
   -- mit einem eine Durchgangsöffnung aufweisenden zweiten Endstück zum Fixieren des zweiten Rohrsegments,
- wobei sich durch jede der beiden Durchgangsöffnungen jeweils eines der beiden Rohrsegmente erstreckt und jede der beiden Durchgangsöffnungen einen Innendurchmesser aufweist, der größer ist als ein Außendurchmesser des jeweils zugehörigen Rohrsegments, so daß zwischen Rohrsegment und Endstück ein Zwischenraum gebildet ist.

Des weiteren umfassen Meßaufnehmer der beschriebenen Art eine mit einer entsprechenden Meßgerät-Elektronik elektrisch verbundene, dem Antreiben des wenigstens einen Meßrohrs dienende Erregeranordnung mit einem auf das Meßrohr mechanisch einwirkenden, insb. elektro-dynamischen oder elektro-magnetischen, Schwingungserreger sowie eine Schwingungsmeßsignale liefernden Sensoranordnung, die wenigstens zwei voneinander beabstandete, auf Vibrationen des Meßrohrs reagierende Sensorelemente aufweist. Im Betrieb wird die Erregeranordnung von der Meßgerät-Elektronik mittels entsprechender Erregersignale in geeigneter Weise so angesteuert, daß das Meßrohr zumindest temporär Vibrationen, insb. Biegeschwingungen, ausführt.

Der Vollständigkeit halber sei noch erwähnt, daß die gezeigten Trägerelemente üblicherweise zu einem das wenigstens eine Meßrohr mit den daran angeordneten Schwingungserregern und -sensoren sowie allfällige weitere Komponenten des Meßaufnehmers einhausenden Meßaufnehmer-Gehäuse vervollständigt sind.

Prinzipiell gibt es bei derartigen Messaufnehmern nur zwei Arten von Rohrverläufen, nämlich einerseits gerade Messrohre und andererseits gebogene Messrohr-Schleifen, unter denen die U-förmigen oder U-ähnlichen wohl die bevorzugten Rohrformen darstellen. Insbesondere bei dem Messen von Massedurchflüssen dienenden Coriolis-Massedurchflussaufnehmern werden bei beiden Arten von Rohrverläufen aus Symmetriegründen zumeist zwei im Ruhezustand in zwei parallelen Ebenen parallel zueinander verlaufende und zumeist auch parallel vom Fluid durchströmte gerade Messrohre bzw. entsprechende Messrohr-Schleifen verwendet. Zu der einen der beiden Varianten mit zwei parallelen geraden Rohren kann beispielsweise auf die US-A 47 68 384, die US-A 47 93 191 und die US-A 56 10 342 sowie zu der anderen Variante mit zwei parallelen, insb. identisch geformten, U-förmigen Rohrschleifen z. B. auf die US-A 41 27 028 verwiesen werden. Neben den vorbeschriebenen Typen von nach dem Coriolis-Prinzip arbeitenden Massedurchflussaufnehmern mit Doppel-Messrohranordnung hat sich bereits seit längerem ein weiterer Typ Messaufnehmer am Markt etabliert, nämlich solche mit einem einzigen geraden oder gebogenen Messrohr. Derartige Messaufnehmer sind z. B. in der US-A 45 24 610, der US-A 48 23 614, der US-A 52 53 533, der US-A 60 06 609 oder in der WO-A 02/099363 beschrieben.

Für den Fall, daß es sich bei dem verwendeten Meßaufnehmer um einen solchen mit einem einzigen geraden Meßrohr handelt, sind im Meßaufnehmer ferner ein, insb. schwingfähig im Meßaufnehmer-Gehäuse aufgehängtes, am Meßrohr fixierter Gegenschwinger vorgesehen, der abgesehen vom Haltern des Schwingungserregers und der Sensorelemente, dazu dient, das vibrierende Meßrohr von der angeschlossenen Rohrleitung schwingungstechnisch zu entkoppeln. Der Kompensationszylinder kann dabei z.B. als ein koaxial zum Meßrohr angeordneter rohrförmiger Kompensationzylinder oder kastenförmiger Tragrahmen ausgeführt sein. Den referierten Merkmalsensembles der einzelnen vorbeschriebenen Meßaufnehmer ist noch hinzuzufügen, dass ein gerades Meßrohr bzw. gerade Meßrohre bevorzugt aus reinem Titan, einer Titan-Legierung mit hohem Titangehalt, reinem Zirconium oder einer Zirconium-Legierung mit hohem Zirconiumgehalt bestehen, da sich gegenüber Meßrohren aus rostfreiem Stahl, der bei geraden Meßrohren an sich möglich ist, kürzere Baulängen ergeben, und dass ein gebogenes Meßrohr bzw. gebogene Meßrohre bevorzugt aus rostfreiem Stahl bestehen, obwohl Titan oder Zirconium bzw. deren Legierungen auch hier als Material der Meßrohre möglich sind.

Bei In-Line-Meßgeräten der beschriebenen Art, die als Coriolis-Massendurchflußmesser eingesetzt werden, ermittelt die jeweilige Meßgerät-Elektronik im Betrieb u.a. eine Phasendifferenz zwischen den beiden von den Sensorelementen gelieferten Schwingungsmeßsignalen und gibt die Meßgerät-Elektronik an ihrem Ausgang ein davon abgeleitetes Meßwertsignal ab, das einen mit dem zeitlichen Verlauf des Massendurchflusses korrespondierenden Meßwert darstellt. Soll, wie bei derartigen In-Line-Meßgeräten üblich, auch die Dichte des Mediums gemessen werden, so ermittelt die Meßgerät-Elektronik anhand der Schwingungsmeßsignale weiters eine momentane Schwingfrequenz der Meßrohre. Außerdem kann beipsielsweise auch die Viskosität des Mediums anhand der zur Aufrechterhaltung von den Meßrohr-Schwingungen erforderlichen Leistung, insb. einem entsprechenden Erregerstrom für die Erregeranordnung, gemessen werden.

Neben der Möglichkeit des gleichzeitigen Messens meherer solcher Prozeßgrößen, insb. des Massendurchflusses, der Dichte und/oder der Viskosität, mittels ein und desselben Meßgerät besteht ein weiterer wesentlicher Vorteil von In-Line-Meßgeräten mit Meßaufnehmern vom Vibrationstyp u.a. darin, daß sie eine sehr hohe Meßgenauigkeit bei vergleichsweise geringer Störempfindlichkeit aufweisen. Darüber hinaus kann ein solches Meßgerät für praktisch jedes fließ- oder strömunsgfähiges Medium verwendet und praktisch in jedem Anwendungsbereich in der Mess- und Automatisierungstechnik eingesetzt werden.

Bei der Fertigung solcher Meßaufnehmer vom Vibrationstyp, wie auch bereits in der US-A 56 10 342, der US-A 60 47 457, der US-B 61 68 069, der US-A 65 98 281, der US-B 66 34 241 oder auch der WO-A 03/048693 ausführlich diskutiert, kann die Befestigung des Meßrohrs innerhalb des Trägerelements, sei es durch Schweißen, Löten und/oder Verpressen, ein besonderes Problem, insb. im Hinblick auf die Stabilität des Nullpunkts und/oder die Verfügbarkeit des Meßaufnehmers, darstellen. Zudem können, wie der der US-A 60 47 457, US-B 61 68 069, der US-B 65 98 281, der US-B 66 34 241 oder der US-B 65 23 421 entnehmbar, erhebliche Probleme beim Befestigen des Meßrohrs innerhalb des Trägerelements auftreten, wenn Meßrohr und Trägerelement aus verschiedenen Materialien, beispielsweise Titan und Edelstahl, bestehen.

Wie weiterhin, u.a. auch in der US-A 56 10 342, der US-A 60 47 457 oder der WO-A 03/048693, ausgeführt, kann eine geeignete Lösung des Problems darin bestehen, daß das Meßrohr durch Kraft- und/oder Formschluß im Trägerelement endseitig fixiert wird, wobei dieser Kraft- und/oder Formschluß mittels Kaltverformung der Endstücke und/oder der Rohrsegmente hergestellt werden. Untersuchungen an nach diesem Verfahren gefertigten Messaufnehmern haben jedoch gezeigt, dass die üblicherweise unterschiedlichen Ausdehnungsverhalten der oben erwähnten Endstücke und der darin jeweils eingespannten Rohrsegmente des Messrohrs dazu führen können, dass die durch die Endstücke auf das Messrohr ausgeübten Einspannkräfte bei Temperaturschwankungen, insb. bei allfälligen Temperaturschocks wie sie z. B. bei turnusmässig durchgeführten Reinigungsmassnahmen mit extrem heissen Spülflüssigkeiten auftreten können, unter einen kritischen Wert sinken können. Dies wiederum kann bedeuten, dass Endstück und Messrohr aufgrund von thermisch bedingten Ausdehnungen den durch das Walzen herbeigeführten mechanischen Kontakt verlieren und somit das Trägerelement gegen das Messrohr um die oben erwähnte Schwingungsachse verdrehbar wird. Für denn dann, insb. bei Messaufnehmern mit im Betrieb auch Torsionsschwingungen um die Schwingungsachse ausführenden Messrohren, nicht mehr sicher auszuschliessenden Fall eines Verdrehens des Trägers wäre ein Auswechseln des gesamten Messgeräts praktisch unvermeidlich. Vergleichbare Effekte sind in diesem Zusammenhang auch in der WO-A 03/048693 oder der US-B 65 98 281 diskutiert worden.

Ausgehend von den vorbeschriebenen Nachteilen im Stand der Technik, die mit den herkömmlicherweise bei der Herstellung von Meßaufnehmern der beschriebenen Art zur Fixierung von Meßrohren im Trägerelement angewendeten Verfahren einhergehen, besteht eine Aufgabe der Erfindung darin, Messaufnehmer vom Vibrationstyp dahingehend zu verbessern, dass möglichst unter Verzicht auf Schweiß- oder Lötverbindungen zwischen Meßrohr und Trägerelement eine mechanisch hochfeste und mechanisch hochbelastbare mechanische Verbindung geschaffen werden kann.

Zur Lösung der Aufgabe besteht die Erfindung in einem Messaufnehmer vom Vibrationstyp gemäß Anspruch 1.

Nach einer ersten Ausgestaltung des Messaufnehmers der Erfindung ist der Federkörper als Federpaket ausgebildet, das aus zwei oder mehreren, sich bezüglich der Schwingungsachse im wesentlichen radial erstreckenden Federblechen besteht, und das den zwischen Rohrsegment und Endstück gebildeten Zwischenraum zumindest teilweise so ausfüllt, daß die Federbleche sowohl das zugehörige Rohrsegment als auch das zugehörige Endstück kontaktieren.

Nach einer zweiten Ausgestaltung des Messaufnehmers der Erfindung sind die Federbleche im wesentlichen ringscheibenförmig ausgebildet.

Nach einer dritten Ausgestaltung des Messaufnehmers der Erfindung weisen die Federbleche eine im wesentlichen sternförmige und/oder mäanderförmige Struktur auf.

Nach einer vierten Ausgestaltung des Messaufnehmers der Erfindung sind die Federbleche mit im wesentlichen radialen Schlitzen versehen.

Nach einer fünften Ausgestaltung des Messaufnehmers der Erfindung liegen die Federbleche in Richtung der Schwingungsachse hintereinander.

Nach einer sechsten Ausgestaltung des Messaufnehmers der Erfindung bestehen die Federbleche aus Metall, insb. aus Federstahl.

Nach einer siebenten Ausgestaltung des Messaufnehmers der Erfindung ist zwischen zumindest zwei Federblechen eine Vibrationen dämpfende Schicht aus Kunststoff vorgesehen.

Nach einer achten Ausgestaltung des Messaufnehmers der Erfindung ist eine mit dem Endstück, insb. lösbar, verbundene Klemmvorrichtung für die Federbleche vorgesehen, die im wesentlichen in Richtung der Schwingungsachse wirkende Verformungskräfte in das Federpaket einleitet.

Nach einer neunten Ausgestaltung des Messaufnehmers der Erfindung ist ein zweiter Federkörper auf das wenigstens eine Rohrsegment aufgeschoben, und ist zwischen den beiden Federkörpern eine Abstandshülse angeordnet.

Ein Grundgedanke der Erfindung besteht darin, die Fixierung des Messrohrs im Meßaufnehmer zumindest anteilig mittels einer reibschlüssigen Verbindung zu realisieren, die vergleichsweise einfach, insb. auch wieder lösbar, zu montieren ist und bei der, falls erforderlich, ohne weiteres auch auf Standardverbindungselemente, wie z.B. Ringfedern, Spieth-Hülsen, Sternscheiben oder dergleichen, zurückgegriffen werden kann.

Ein wesentlicher Vorteil der Erfindung besteht u.a. darin, dass, falls erforderlich, auf einen Löt- oder Schweissprozess zur Fixierung des Metallkörpers auf dem Messrohr verzichtet werden kann, da es durch die Einwirkung des Druckes zu einer sehr stabilen mechanischen Verbindung zwischen Messrohr und Metallkörper kommt. Diese ist so fest, dass sie sich auch durch lange andauernde Biege- und/oder Torsionsschwingungen des Messrohrs um die Schwingungsachse praktisch nicht löst.

Durch die Verwendung eines in Richtung der Schwingungsachse länglich gestreckten Federkörpers, beispielsweise bei der Verwendung eines aus Sternscheiben zusammengesetzten Federpakets oder einer Spieth-Hülse, kann zudem auf sehr einfache Art und Weise sichergestellt werden, dass, trotz einer entlang der durch das Federpaket gebildeten Einspannstelle wirkenden vergleichsweise hohen Einspannkraft, das Lumen der Rohrsegmente des Messrohrs auch an diesen Einspannstellen praktisch nicht eingeengt wird und somit die ideale kreiszylindrische Form des Meßrohrlumens im wesentlichen erhalten bleibt. Jedenfalls kann ohne weiteres sicher gestellt werden, daß eine unter Einwirkung der vom Federkörper ausgehenden Einspannkräfte allfällig auftretende Verkleinerung des Außendurchmessers des jeweiligen Rohrsegments sehr gering ausfällt im Vergleich zu einer mit der elastischen Verformung des aufgeschobenen Federkörpers einhergehenden Vergrößerung eines entsprechenden Innendurchmessers des Federkörpers. Anders gesagt, es kann dafür Sorge getragen werden, daß der Reibschluß im wesentlichen durch eine Gestaltänderung im Federkörper bei gleichzeitig weitgehend formstabil bleibendem Meßrohr bewirkt wird. Infolgedessen können Ablagerungen im Meßrohr wirksam vermieden werden, die sich ansonsten im Betrieb des Meßaufnehmers ggf. bilden würden.

Die Erfindung und weitere vorteilhafte Ausgestaltungen werden nun anhand der Figuren der Zeichnung näher erläutert, in der - teilweise perspektivisch - verschiedene Ausführungsbeispiele dargestellt sind und in der gleiche Teile jeweils mit denselben Bezugszeichen bezeichnet sind.
- Fig. 1: zeigt in geschnittener Ansicht für die Erfindung wesentliche Teile eines Ausführungsbeispiels eines Meßaufnehmers vom Vibrationstyp mit wenigstens einem Messrohr,
- Fig. 2a: zeigt perspektivisch-schematisch in teilweise geschnittener Ansicht Teile des Meßaufnehmers von Fig. 1,
- Fig. 2b: zeigt perspektivisch-schematisch in einer Explosionssansicht die in Fig. 2a dargestellten Teile des Meßaufnehmers, und
- Fign. 3a, b: zeigen ein für die Fixierung des Messrohrs innerhalb des Meßaufnehmers geeignetes Federblech.

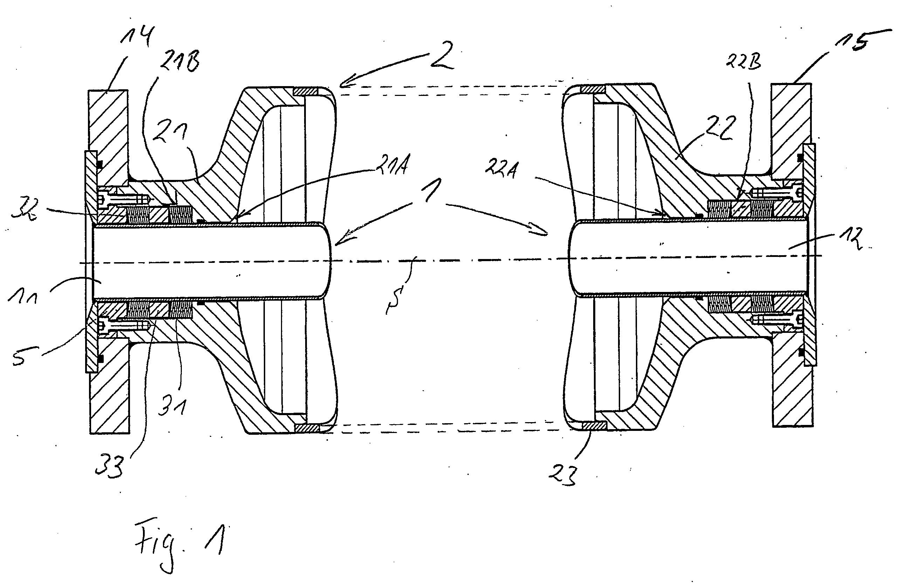

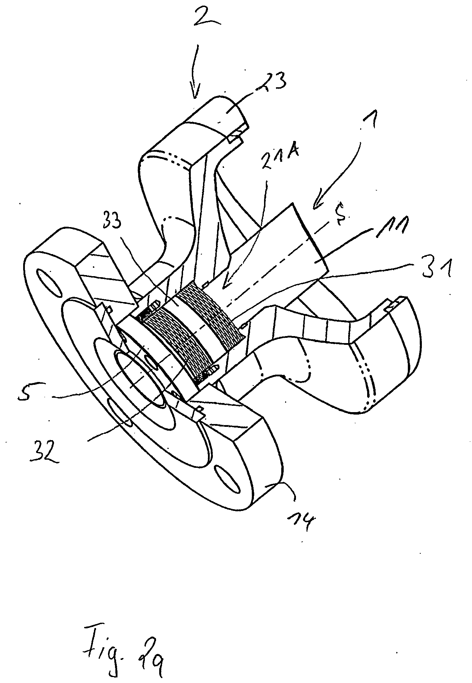

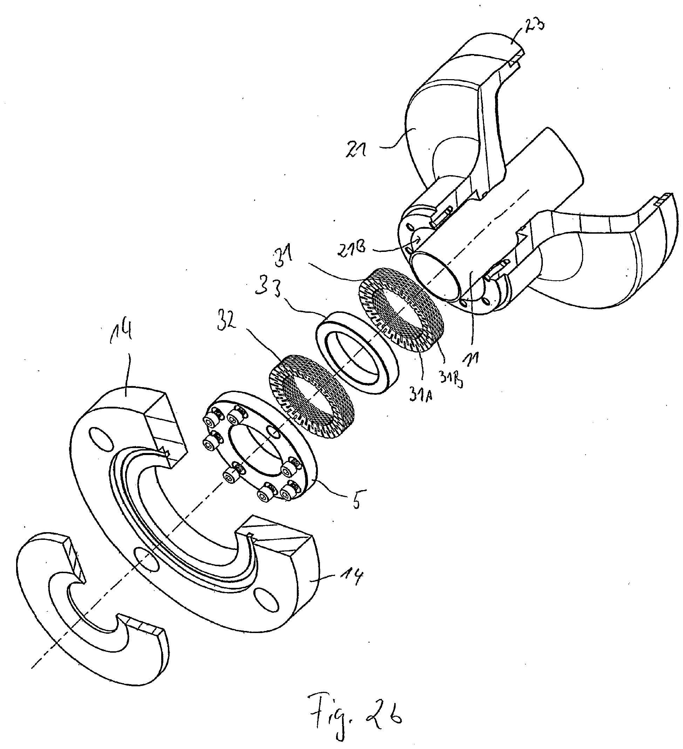

In den Fign. 1, 2a und 2b sind für die Erfindung wesentliche Teile eines Meßaufnehmers vom Vibrationstyp, z. B. eines Coriolis-Massedurchflussaufnehmers, dargestellt, während restliche und zur vollen Funktion ebenfalls erforderlichen Teile aus Übersichtlichkeitsgründen nicht gezeigt sind; insoweit wird insb. auf die erwähnten Dokumente des Standes der Technik verwiesen.

Der Messaufnehmer umfaßt wenigstens ein im Betrieb ein zu messendes Fluid, z. B. einer Flüssigkeit, einem Dampf oder einem Gas, führendes - hier nur teilweise gezeigtes - Meßrohr 1 mit einem Einlassende und einem Auslassende. Das Messrohr ist im Betrieb des Messaufnehmers in den Verlauf einer vom Fluid durchströmten Rohrleitung eingesetzt, wobei das Messrohr 1 zum Hindurchströmenlassen des Fluids über ein in das Einlassende mündendes erstes gerades Rohrsegment 11 und über ein in das Auslassende mündendes zweites gerades Rohrsegment 12 mit einer angeschlossenen Rohrleitung kommuniziert. Zum Anschließen des Messrohrs 1 an die Rohrleitung können in der dem Fachmann bekannten Weise z.B. Flansche 14,15 oder Verschraubungen oder dgl. dienen. Im Betrieb des Meßaufnehmers wird das Meßrohr 1 zumindest zeitweise vibrieren gelassen, um das Fluid beschreibende Reaktionskräfte, z.B. mit dem Massedurchfluss korrelierte Corioliskräfte und/oder mit der Viskosität korreliert Reibungskräfte, zu erzeugen, wobei das Meßrohr 1 zumindest anteilig mechanische Schwingungen um eine die beiden Rohrsegmente 11, 12 verbindende gedachte Schwingungsachse S ausführt. Zum Erfassen von Vibrationen des Messrohrs 1 und zum Erzeugen von mit diesen korrespondierenden Schwingungsmeßsignalen können in der dem Fachmann bekannten Weise entsprechende, hier nicht dargestellte, Schwingungssensoren in der Nähe des Messrohrs 1 angebracht sein.

Zum schwingfähigen Haltern des Meßrohrs dient ein zumindest über die beiden Rohrsegmente 11, 12 mit dem Messrohr 1 verbundenes und dieses zumindest teilweise umhüllendes Trägerelement 2, das z. B. kastenförmig oder, wie insb. in den Fign. 2a, b dargestellt, rohrförmig ausgebildet sein kann.

Das Rohrsegment 11 ist von einer sich entlang desselben im wesentlichen koaxial erstreckenden Durchgangsöffnung 21A eines ersten Endstücks 21 aufgenommen, während das Rohrsegment 12 in eine sich entlang desselben erstreckenden Durchgangsöffnung 22A eines zweiten Endstücks 22 gesteckt ist. Wie in Fig. 1 dargestellt, sind die beiden Endstücke 21, 22 außer über das Messrohr 1 mittels wenigstens eines weiteren, beispielsweise rohrförmigen oder plattenförmigen, Verbindungstück 23 des Trägerelements 2 miteinander mechanisch verbunden. Jede der beiden Durchgangsöffnungen 21A, 22A weist einen Innendurchmesser auf, der größer ist als ein Außendurchmesser des jeweils zugehörigen Rohrsegments 11 bzw. 12, so daß zwischen dem jeweiligen Rohrsegment 11, 12 und dem jeweilgen Endstück 21 bzw. 22 ein Zwischenraum 21B bzw. 22B gebildet ist.

Zum mechanischen Verbinden des Rohrsegements 11 mit dem zugehörigen Endstück 21 dient wenigstens ein erster Federkörper 31, der auf das Rohrsegment 11 aufgeschoben ist. Der Federkörper 31 ist dabei derart im Zwischenraum 21 B angeordnet, daß er zumindest abschnittsweise sowohl das Rohrsegment 11 als auch das Endstück 21 kontaktiert. Zu dem ist der Federkörper 31 so ausgebildet und so im Zwischenraum 21 B angeordnet, daß er zumindest abschnittsweise radial wirkenden Verformungskräften unterworfen und aufgrund von damit einhergehenden elastischen Verformungen gegen das zugehörige Rohrsegment 11 und das zugehörige Endstück 21 gedrückt gehalten ist. Das Rohrsegment 11 wird also praktisch mit dem Endstück 21 verklemmt. Auf diese Weise wird ein mechanisch hochfester und dauerhafter Reibschluß zwischen Rohrsegment 11 und Federkörper 31 einerseits und zwischen Federkörper 31 und Endstück 21 andererseits hergestellt, der hervorragend dazu geeignet ist, das betriebsgemäß hochfrequent vibrierende Meßrohr 1 dauerhaft und sicher mit dem Trägerelement 2 zu verbinden.

Zum Bewirken der für die Verformung des Ferderkörpers 3 erforderlichen Spannkräfte ist ferner eine mit dem Endstück 21, insb. lösbar, verbundene Klemmvorrichtung 5 für den Federkörper 3 vorgesehen, die im wesentlich in Richtung der Schwingungsachse S wirkende Verformungskräfte in den Federkörper 3 einleitet.

Nach einer Ausgestaltung der Erfindung ist der wenigstens eine Federkörper 31 als ein Federpaket ausgebildet, das aus zwei oder mehreren, sich bezüglich der Schwingungsachse S im wesentlichen radial erstreckenden und in Richtung der Schwingungsachse S hintereinander liegenden Federblechen 31A, 31 B besteht. Das Federpaket füllt dabei den zwischen Rohrsegment 11 und Endstück 21 gebildeten Zwischenraum 21 B zumindest teilweise so aus, daß die Federbleche 31A, 31 B sowohl das zugehörige Rohrsegment 11 als auch das zugehörige Endstück 21 kontaktieren. Zur weiteren Erhöhung der Dämpfung, also zur Verringerung der mechanischen Güte des Federpakets, kann beispielsweise zwischen zwei oder mehren Federblechen 31A, 31 B jeweils eine Vibrationen dämpfendem Schicht aus Kunststoff eingebracht sein.

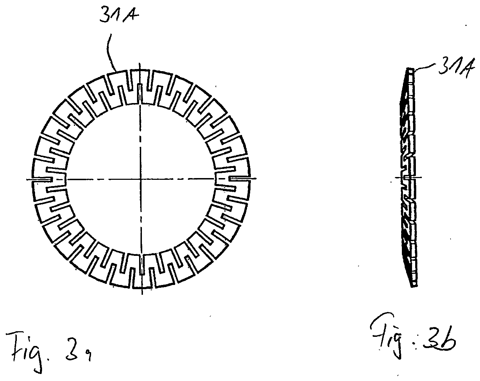

Die Federbleche 31 sind im gezeigten Ausführungsbeispiel im wesentlichen ringscheibenförmig ausgebildet und mit im wesentichen radialen Schlitzen versehen, die vorzugsweise so angelegt sind, daß die Federbleche 31A, 31 B eine im wesentlichen sternförmige oder auch mäanderförmige Struktur aufweisen, vg. Fign. 2b, 3a, 3b . Derartige, insb. als Sternscheiben ausgebildete, Federbleche 31A, 31B können beispielsweise auch als Normteile bezogen werden.

Nach einer weiteren Ausgestaltung der Erfindung ist der Federkörper 31 als eine Spieth-Hülse oder als ein Ringfeder-Spannelement ausgebildet.

Nach einer Weiterbildung der Erfindung ist, insb. für den Fall, daß der Federkörper 31 als Federpaket ausgebildet ist, ferner ein zweiter Federkörper 32 vorgesehen, der ebenfalls auf das Rohrsegment 11 aufgeschoben und in vergleichbarer Weise zum Federkörper 31 mit dem Endstück 21 verklemmt ist. Bei dieser Weiterbildung der Erfindung ist, wie in Fign. 1, 2a, b dargestellt, zwischen den beiden Federkörpern 31, 32 ferner eine biegesteife, im Vergleich zu den beiden Federkörpern 31, 32 nicht verformbare Abstandshülse 33 vorgesehen, die im wesentlichen koaxial zum Rohrsegment 11 verlaufend im Meßaufnehmer angeordnet ist und die dazu dient, die von den beiden Federkörpern 31, 32 erzeugten Haltekräfte und -momente im Vergleich zu lediglich aneinander gereihten Federkörpern auf sehr einfache Weise deutlich zu erhöhen.

Ein wesentlicher Vorteil der Erfindung ist darin zu sehen, dass unter Beibehaltung der Vorteile des bereits in der US-A 56 10 342 beschriebenen Verfahrens zur Herstellung von Messaufnemern, nämlich das Messrohr 1 unter Verzicht auf Schweiss- oder Lötverbindungen und somit unter Vermeidung von Wärmespannungen schonend am Trägerelement 2 zu fixieren, auf sehr einfache Weise eine erhebliche Verbesserung der Festigkeit und insb. auch der Beständigkeit der mechanischen Verbindung zwischen Messrohr 1 und Trägerelement 2 erzielt werden kann. Des weiteren kann sichergestellt werden, daß das Meßrohr trotz der hohen Einspannkräfte, mit denen es im Trägerelement 2 gehalten ist, selbst kaum Verformungen erfährt und somit über die gesamte Meßrohrlänge auch nach dem Einbau einen weitgehend gleichbleibenden uniformen Querschnitt aufweist.

## Patentansprüche

1. Messaufnehmer vom Vibrationstyp, insb. zum Erzeugen von massedurchflussabhängigen Corioliskräften und/oder zum Erzeugen von viskositätsabhängigen Reibungskräften in strömenden Fluiden, welcher Messaufnehmer umfasst:
- wenigstens ein ein Einlassende und ein Auslassende aufweisendes, zumindest zeitweise vibrierendes Messrohr (1) zum Führen eines Fluids,
-- wobei das Messrohr (1) zum Hindurchströmenlassen des Fluids über ein in das Einlassende mündendes erstes Rohrsegment (11) und über ein in das Auslassende mündendes zweites Rohrsegment (12) mit einer angeschlossenen Rohrleitung kommuniziert, und
-- wobei das Messrohr (1) im Betrieb mechanische Schwingungen um eine die beiden Rohrsegmente (11, 12) verbindende gedachte Schwingungsachse (S) ausführt, sowie
- ein Trägerelement (2) zum schwingfähigen Haltern des Messrohrs (1)
-- mit einem eine Durchgangsöffnung (21A) aufweisenden ersten Endstück (21) zum Fixieren des ersten Rohrsegments (11) und
-- mit einem eine Durchgangsöffnung (22A) aufweisenden zweiten Endstück (22) zum Fixieren des zweiten Rohrsegments (12),
- wobei sich durch jede der beiden Durchgangsöffnungen (22A) jeweils eines der beiden Rohrsegmente (11) bzw. (12) erstreckt und jede der beiden Durchgangsöffnungen (21A, 22A) einen Innendurchmesser aufweist, der größer ist als ein Außendurchmesser des jeweils zugehörigen Rohrsegments (21, 22), so daß zwischen Rohrsegment (21, 22) und Endstück (11, 12) ein Zwischenraum (21B, 22B) gebildet ist,
**dadurch gekennzeichnet, daß** auf wenigstens einem der beiden Rohrsegmente (11) bzw. (12) wenigstens ein, insb. metallischer, erster Federkörper (31) aufgeschoben ist, wobei der Federkörper (31) derart im Zwischenraum (21B, 22B) angeordnet ist, daß er zumindest abschnittsweise sowohl das zugehörige Rohrsegment (11, 12) als auch das zugehörige Endstück (21, 22) derart kontaktiert, daß er zumindest abschnittsweise radial wirkenden Verformungskräften unterworfen und infolge von damit einhergehenden elastischen Verformungen unter Bildung eines Reibschlusses zwischen Rohrsegment (11; 12) und Federkörper (31) sowie eines Reibschlusses zwischen Endstück (21; 22) und Federkörper (31) gegen das zugehörige Rohrsegment (11, 12) und das zugehörige Endstück (21, 22) gedrückt gehalten ist, wodurch das Rohrsegment in der zughörigen Durchgangsöffnung festgeklemmt ist.

2. Messaufnehmer nach Anspruch 1, weiters **dadurch gekennzeichnet, daß** der erste Federkörper (31) als ein Federpaket ausgebildet ist,
- das aus zwei oder mehreren, sich bezüglich der Schwingungsachse (S) im wesentlichen radial erstreckenden Federblechen (31A, 31 B) besteht, und
- das den zwischen Rohrsegment (11, 12) und Endstück (21, 22) gebildeten Zwischenraum zumindest teilweise so ausfüllt, daß die Federbleche sowohl das zugehörige Rohrsegment (11, 12) als auch das zugehörige Endstück (21, 22) kontaktieren.

3. Messaufnehmer nach Anspruch 2, weiters **dadurch gekennzeichnet, daß** die Federbleche (31A, 31 B) im wesentlichen ringscheibenförmig ausgebildet sind.

4. Messaufnehmer nach Anspruch 2 oder 3, weiters **dadurch gekennzeichnet, daß** die Federbleche (31A, 31 B) eine im wesentlichen sternförmige und/oder mäanderförmige Struktur aufweisen.

5. Messaufnehmer nach dem der vorherigen Anspruch 2 bis 4, weiters **dadurch gekennzeichnet, daß** die Federbleche (31A, 31B) mit im wesentlichen radialen Schlitzen versehen sind.

6. Messaufnehmer nach einem der vorherigen Ansprüche 2 bis 5, weiters **dadurch gekennzeichnet, daß** die Federbleche (31A, 31B) in Richtung der Schwingungsachse (S) hintereinander liegen.

7. Messaufnehmer nach einem der vorherigen Ansprüche 2 bis 6, weiters **dadurch gekennzeichnet, daß** zwischen zumindest zwei Federblechen (31A, 31 B) eine Schicht aus Vibrationen dämpfendem Kunststoff vorgesehen ist.

8. Messaufnehmer nach Anspruch 1, weiters **dadurch gekennzeichnet, daß** der erste Federkörper (3) als eine Spieth-Hülse oder als ein Ringfeder-Spannelement ausgebildet ist.

9. Messaufnehmer nach einem der vorherigen Ansprüche, weiters **dadurch gekennzeichnet, daß** eine mit dem wenigstens einen Endstück (21, 22), insb. lösbar, verbundene Klemmvorrichtung (5) für den ersten Federkörper (31) vorgesehen ist, die im wesentlich in Richtung der Schwingungsachse (S) wirkende Verformungskräfte in den ersten Federkörper (31) einleitet.

10. Messaufnehmer nach einem der vorherigen Ansprüche, weiters **dadurch gekennzeichnet, daß** ein zweiter Federkörper (32) auf das wenigstens eine Rohrsegment (11, 12) aufgeschoben ist, und daß zwischen den beiden Federkörpern (31, 32) eine Abstandshülse (33) angeordnet ist.

## Claims

1. Vibronic sensor, particularly one to generate Coriolis forces that depend on mass flow and/or to generate viscosity-dependent frictional forces in flowing fluids, said sensor comprising:
- at least one measuring tube (1) that has an inlet end and an outlet end and vibrates at least temporarily, said tube being designed to conduct a fluid
-- wherein the measuring tube (1) communicates with a connected pipe via a first tube segment (11) that enters into the inlet end and via a second tube segment (12) that enters into the outlet end so that the fluid can flow through the tube, and
-- wherein, during operation, the measuring tube (1) executes mechanical oscillations around an imaginary axis of oscillation (S) that connects the two tube segments (11, 12), as well as
- a support element (2) designed to hold the measuring tube (1) so that it is able to oscillate,
-- with a first end section (21), which has a clearance opening (21A), designed to fix the first tube segment (11) in place, and
-- with a second end section (22), which has a clearance opening (22A), designed to fix the second tube segment in place (12)
- wherein one of the two tube segments (11) or (12) extends through each of the two clearance openings (21A, 22A) and each of the two clearance openings (21A, 22A) has an inner diameter that is greater than an outer diameter of the corresponding tube segment (21, 22), such that an intermediate space (21 B, 22B) is formed between the tube segment (21, 22) and the end section (11, 12),
**characterized in that** at least a first, particularly metallic, spring body (31) is fitted onto at least one of the two tube segments (11) or (12), said spring body (31) being arranged in the intermediate space (21 B, 22B) in such a way that it comes into contact with both the corresponding tube segment (11, 12) and the corresponding end section (21, 22) at least in sections in such a way that it is subject, at least in sections, to deformation forces acting radially and, due to resulting elastic deformations, it is kept pressed against the corresponding tube segment (11, 12) and the corresponding end section (21, 22), forming a frictional connection between the tube segment (11, 12) and the spring body (31) as well as a frictional connection between the end section (21, 22) and the spring body (31), as a result of which the tube segment is firmly wedged in the corresponding clearance opening.

2. Sensor as claimed in Claim 1, further **characterized in that** the first spring body (31) is designed as a spring assembly,
- which consists of two or more spring plates (31 A, 31 B) that essentially extend radially with regard to the axis of oscillation (S), and
- which at least partially fills the intermediate space formed between the tube segment (11, 12) and the end section (21, 22) in such a way that the spring plates come into contact with both the corresponding tube segment (11, 12) and the corresponding end section (21, 22).

3. Sensor as claimed in Claim 2, further **characterized in that** the spring plates (31A, 31 B) essentially have the shape of an annular disc.

4. Sensor as claimed in Claim 2 or 3, further **characterized in that** the spring plates (31A, 31 B) essentially have a star-shaped and/or meander-like structure.

5. Sensor as claimed in one of the previous Claims 2 to 4, further **characterized in that** the spring plates (31A, 31 B) have essentially radial slots.

6. Sensor as claimed in one of the previous Claims 2 to 5, further **characterized in that** the spring plates (31A, 31 B) are located one behind the other in the direction of the axis of oscillation (S).

7. Sensor as claimed in one of the previous Claims 2 to 6, further **characterized in that** a layer of plastic that dampens vibrations is provided between at least two spring plates (31 A, 31 B).

8. Sensor as claimed in Claim 1, further **characterized in that** the first spring body (3) is designed as a Spieth sleeve or as an annular spring clamping element.

9. Sensor as claimed in one of the previous claims, further **characterized in that** a clamping device (5), which is connected to the at least one end piece (21, 22), particularly in a detachable manner, is provided for the first spring body (31), said clamping device introducing deformation forces, which act essentially in the direction of the axis of oscillation (S), into the first spring body (31).

10. Sensor as claimed in one of the previous claims, further **characterized in that** a second spring body (32) is fitted onto the at least one tube segment (11, 12), and that a spacer sleeve (33) is arranged between the two spring bodies (31, 32).

## Revendications

1. Capteur du type à vibrations, notamment destiné à la génération de forces de Coriolis fonction du débit massique et/ou destiné à la génération de forces de frottement fonction de la viscosité dans des fluides en circulation, lequel capteur comprend :
- au moins un tube de mesure (1) vibrant au moins temporairement, présentant une extrémité d'entrée et une extrémité de sortie, lequel tube est destiné à acheminer un fluide
-- le tube de mesure (1) communiquant avec une conduite raccordée pour l'écoulement du fluide à travers un premier segment de tube (11) débouchant dans l'extrémité d'entrée et à travers un deuxième segment de tube (12) débouchant dans l'extrémité de sortie, et
-- le tube de mesure (1) exécutant en fonctionnement des vibrations mécaniques autour d'un axe de vibration (S) imaginaire reliant les deux segments de tube (11, 12), ainsi que
- un élément support (2) destiné au maintien du tube de mesure (1) de telle sorte qu'il soit apte à vibrer,
-- avec une première pièce d'extrémité (21) présentant une ouverture de passage (21A), destinée à la fixation du premier segment de tube (11) et
-- avec une deuxième pièce d'extrémité (22) présentant une ouverture de passage (22A), destinée à la fixation du deuxième segment de tube (12)
- l'un des deux segments de tube (11) ou (12) s'étendant à travers chacune des deux ouvertures de passage (21 A, 22A) et chacune des deux ouvertures de passage (21A, 22A) présentant un diamètre intérieur de conduite, qui est supérieur à un diamètre extérieur du segment de tube (21, 22) correspondant, si bien qu'un espace intermédiaire (21 B, 22B) est formé entre le segment de tube (21, 22) et la pièce d'extrémité (11, 12),
**caractérisé en ce qu'**au moins un premier corps élastique (31), notamment métallique, est emboîté sur au moins l'un des deux segments de tube (11) ou (12), le corps élastique (31) étant disposé dans l'espace intermédiaire (21 B, 22B) de telle manière à ce qu'il entre en contact au moins par parties aussi bien avec le segment de tube (11, 12) correspondant qu'avec la pièce d'extrémité (21, 22) correspondante, si bien qu'il est soumis au moins par parties à des forces de déformation agissant radialement et, du fait des déformations élastiques en découlant, qu'il est maintenu pressé contre le segment de tube (11, 12) correspondant et la pièce d'extrémité (21, 22) correspondante, en formant une liaison par friction entre le segment de tube (11, 12) et le corps élastique (31) ainsi qu'une liaison par friction entre la pièce d'extrémité (21, 22) et le corps élastique (31), ce par quoi le segment de tube est serré dans l'ouverture de passage correspondante.

2. Capteur selon la revendication 1, **caractérisé en outre en ce que** le premier corps élastique (31) est conçu en tant que bloc-ressort,
- qui se compose de deux ou de plusieurs tôles élastiques (31A, 31 B) s'étendant radialement pour l'essentiel par rapport à l'axe de vibration (S), et
- qui remplit au moins partiellement l'espace intermédiaire formé entre le segment de tube (11, 12) et la pièce d'extrémité (21, 22), de telle sorte que les tôles élastiques entrent en contact aussi bien avec le segment de tube (11, 12) correspondant qu'avec la pièce d'extrémité (21, 22) correspondante.

3. Capteur selon la revendication 2, **caractérisé en outre en ce que** les tôles élastiques (31A, 31 B) sont pour l'essentiel en forme de disque annulaire.

4. Capteur selon la revendication 2 ou 3, **caractérisé en outre en ce que** les tôles élastiques (31A, 31 B) présentent une structure pour l'essentiel en forme d'étoile et/ou en forme de méandre.

5. Capteur selon l'une des revendications précédentes 2 à 4, **caractérisé en outre en ce que** les tôles élastiques (31A, 31 B) sont munies pour l'essentiel de fentes radiales.

6. Capteur selon l'une des revendications précédentes 2 à 5, **caractérisé en outre en ce que** les tôles élastiques (31A, 31 B) sont disposées l'une derrière l'autre en direction de l'axe de vibration (S).

7. Capteur selon l'une des revendications précédentes 2 à 6, **caractérisé en outre en ce qu'**est prévue entre au moins deux tôles élastiques (31A, 31 B) une couche constituée de plastique amortissant les vibrations.

8. Capteur selon la revendication 1, **caractérisé en outre en ce que** le premier corps élastique (3) est conçu en tant douille Spieth ou en tant qu'élément de serrage à anneau-ressort.

9. Capteur selon l'une des revendications précédentes, **caractérisé en outre en ce qu'**est prévu pour le premier corps élastique (31) un dispositif de serrage (5) relié avec l'au moins une pièce d'extrémité (21, 22), notamment de façon amovible, lequel dispositif génère dans le premier corps élastique (31) des forces de déformation agissant pour l'essentiel en direction de l'axe de vibration (S).

10. Capteur selon l'une des revendications précédentes, **caractérisé en outre en ce qu'**un deuxième corps élastique (32) est emboîté sur l'au moins un segment de tube (11, 12), et **en ce qu'**est disposée une douille d'écartement (33) entre les deux corps élastiques (31, 32).
